**Europäisches Patentamt**

(19) **European Patent Office**

**Office européen des brevets**

(11) Numéro de publication: **0 152 714**
**B1**

(12) **FASCICULE DE BREVET EUROPEEN**

(45) Date de publication du fascicule du brevet:
**01.04.87**

(51) Int. Cl.⁴: **B 64 C 13/00**, G 05 D 1/00

(21) Numéro de dépôt: **84402726.8**

(22) Date de dépôt: **27.12.84**

(54) **Système de commandes de vol pour aéronef.**

(30) Priorité: **09.01.84 FR 8400206**
**09.01.84 FR 8400207**

(43) Date de publication de la demande:
**28.08.85 Bulletin 85/35**

(45) Mention de la délivrance du brevet:
**01.04.87 Bulletin 87/14**

(84) Etats contractants désignés:
**DE GB IT NL SE**

(56) Documents cités:
**EP - A - 0 046 875**
**EP - A - 0 068 728**
**US - A - 3 679 156**
**US - A - 4 270 168**

**AIRCRAFT ENGINEERING, vol. 49, no. 1, janvier 1977, pages 4-10, Bunhill Publication Ltd., Londres, GB; M. SCOTT: "Electrical flight control for boeing YC-14"**

(73) Titulaire: **AEROSPATIALE Société Nationale Industrielle, 37 boulevard de Montmorency, F-75781 Paris Cédex 16 (FR)**

(72) Inventeur: **Ziegler, Bernard, Quartier Palanque Pibrac, F-31490 Leguevin (FR)**
Inventeur: **Durandeau, Michel, 27, rue Guynemer, F-31000 Toulouse (FR)**
Inventeur: **Collard, Thierry, 61, route de Seysses, F-31000 Toulouse (FR)**

(74) Mandataire: **Bonnetat, Christian et al, Cabinet PROPI Conseils 23 rue de Léningrad, F-75008 Paris (FR)**

## Description

La présente invention concerne un système de commandes de vol pour aéronef.

On sait que les commandes de vol électriques permettent d'utiliser au mieux un calculateur de vol et présentent, par rapport aux commandes de vol mécaniques, les avantages suivants:

— gain de masse;

— possibilité de prise en compte de lois de pilotage évoluées et de paramètres variant en fonction des conditions de vol, permettant notamment d'améliorer les qualités de vol et un pilotage à centrage arrière, ce qui améliore les performances;

— possibilité de prise en compte de fonctions, telles que le contrôle de charge de voilure ou la modulation de portance;

— simplification du travail de montage et de réglage;

— possibilité d'utiliser des organes de pilotage nouveaux, tels que celui appelé minimanche (ministick), de faibles dimensions et pouvant être disposés latéralement par rapport au pilote et/ou au copilote.

Cependant, il n'est pas possible aujourd'hui de démontrer que la probabilité de perte totale momentanée de toutes les commandes électriques de vol est extrêmement improbable (c'est-à-dire inférieure à $10^{-9}$ par heure de vol) de sorte que l'on doit disposer de commandes à transmission mécanique en secours.

Actuellement, sur les avions civils en exploitation, on rencontre les solutions suivantes:

— transmission des ordres du pilote par l'intermédiaire de mélangeurs mécaniques et de servomoteurs (système dit «control wheel steering» ou pilotage transparent), la timonerie étant installée depuis les organes de pilotage jusqu'aux gouvernes;

— servocommandes de puissance à commande électrique normale, additionnée d'une commande mécanique de secours, comme par exemple sur CONCORDE;

— commande électrique, sans secours mécanique, pour les servocommandes des déflecteurs (spoilers) et aérofreins, et tringlerie mécanique pour la commande des servocommandes associées aux ailerons, comme par exemple sur AIRBUS A310, A300-600 et sur BOEING B767 et B757.

Ces diverses solutions connues ne permettent d'obtenir qu'une partie des avantages de la commande électrique, souvent au prix d'une complexité plus grande: elles ne sont donc pas optimisées.

La présente invention a pour objet de remédier à cet inconvénient.

A cette fin, selon l'invention, le système de commandes de vol pour aéronef pourvu d'ailerons, de gouvernes de profondeur, de déflecteurs et d'aérofreins d'extrados, d'une gouverne de direction et d'un empennage horizontal à incidence variable, ledit système comportant une commande électrique, éventuellement sans commande mécanique de secours, pour lesdits déflecteurs et lesdits aérofreins, est caractérisé en ce que les ailerons et les gouvernes de profondeur sont commandés électriquement sans secours mécanique, en ce que la gouverne de direction est commandée mécaniquement et en ce que l'empennage à incidence variable est commandé électriquement, avec secours mécanique.

Grâce à l'invention, on optimise la commande de profondeur et de roulis, tout en assurant une pilotabilité suffisante pour maintenir l'aéronef en ligne de vol en cas de perte des commandes électriques, par exemple à la suite d'une perte totale momentanée des alimentations électriques. En effet, comme on le sait, la commande de la gouverne de direction induit également du roulis, tandis qu'un aéronef est pilotable en profondeur par l'empennage horizontal à incidence variable. Ainsi, en cas de perte des alimentations électriques, les déflecteurs, les aérofreins, les ailerons et les gouvernes de profondeur deviendront inutilisables, mais l'aéronef continuera à pouvoir être piloté en direction, en roulis et en profondeur grâce à la commande mécanique de la gouverne de direction et à la commande mécanique de secours de l'empennage horizontal à incidence variable.

Par ailleurs, à propos de la structure du système de commandes de vol selon l'invention, on peut faire les remarques suivantes:

— une servocommande à deux types de commande (électrique et mécanique) est plus complexe, lourde et onéreuse qu'une servocommande à un seul mode de commande; par suite, l'invention permet de faire des gains importants de maintenace, de masse et de coûts en ce qui concerne la commande des ailerons, des gouvernes de profondeur et de la gouverne de direction;

— l'indroduction de lois de pilotage évoluées, élaborées par des calculateurs, est principalement intéressante pour la commande en profondeur et en roulis; de telles lois peuvent être prises en compte par le système selon l'invention, puisque les ailerons et les gouvernes de profondeur sont commandés électriquement;

— la suppression selon l'invention des commandes mécaniques des ailerons et des gouvernes de profondeur entraîne une réduction importante des efforts de pilotage, ce qui permet de miniaturiser les organes de pilotage.

Par ailleurs, la présente invention permet une organisation de commandes de vol électriques particulièrement adaptée au système de commandes de vol électriques et mécaniques ci-dessus.

A cette fin, selon l'invention, le système de commandes de vol pour aéronef, comportant au moins un calculateur pour commander et surveiller les organes d'actionnement (servocommandes, moteurs, vérins, etc.) desdits ailerons, gouvernes de profondeur, déflecteurs d'extrados, aérofreins d'extrados et empennage horizontal, est remarquable en ce qu'il comporte un premier ensemble de calcul associé auxdits ailerons, auxdites gouvernes de profondeur et audit empennage horizontal à incidence variable et un second ensemble de calcul, de conception et d'origine différentes de celles dudit premier ensemble de calcul, associé auxdits déflecteurs d'extrados et auxdits aérofreins d'extrados, ainsi qu'auxdites gouvernes de profondeur en cas de défaillance dudit premier ensemble de calcul.

Lesdits premier et second ensembles de calcul étant de conception et d'origines différentes permettent d'éviter les risques de pannes simultanées dus à des vices de conception et de fabrication. La probabilité pour que les deux ensembles de calcul tombent simultanément en passe est donc très faible.

De toutes façons, grâce à la structure du système de commandes selon l'invention:

— si le premier ensemble de calcul est défaillant, l'avion reste pilotable, en direction, par la commande mécanique de la gouverne de direction, en roulis, à la fois grâce à cette gouverne de direction et à la commande électrique d'au moins certains déflecteurs par ledit second ensemble de calcul et, en profondeur, à la fois par la commande mécanique de secours de l'empennage horizontal et par la commande électrique de secours des gouvernes de profondeur par ledit second ensemble de calcul;

— si le second ensemble de calcul est défaillant, l'avion reste pilotable électriquement et mécaniquement en direction, en roulis, et en profondeur, seules certaines surfaces d'extrados, éventuellement remplaçables par les ailerons, étant inutilisables;

— enfin, si lesdits premier et second ensembles de calcul sont défaillants, comme on l'a montré ci-dessus, l'avion est mécaniquement pilotable en direction, en roulis et en profondeur.

Avantageusement, ledit premier ensemble de calcul comporte deux calculateurs distincts, tandis que, à chaque aileron, à chaque gouverne de profondeur et à l'empennage horizontal à incidence variable, sont associées deux commandes électrohydrauliques, dont l'une est commandée par l'un desdits calculateurs et l'autre par l'autre calculateur. Ainsi, on peut prévoir deux servocommandes électrohydrauliques pour chaque aileron et pour chaque gouverne de profondeur et deux moteurs hydrauliques commandés par servovalve pour l'empennage horizontal à incidence variable.

On sait qu'il est difficile de synchroniser, sans dispositifs spéciaux affectés à cette fonction, des servocommandes fonctionnant en parallèle et commandées directement par des servovalves. En effet, les erreurs de caractéristiques des servovalves et des capteurs de retour de position entraînent, pour un ordre donné, une erreur de recopie; de ce fait, les différences de position entre des servocommandes pilotées par le même ordre et attachées à la même surface entraînent de l'hystérésis dans la commande et des efforts dans les liaisons, ce qui produit une fatigue structurale.

Par ailleurs, on sait qu'une surface de bord de fuite, telle qu'un aileron ou une gouverne de profondeur, non équilibrée dynamiquement, est susceptible d'être sujette à flottement (flutter) si elle n'est pas pilotée ou amortie.

Aussi, pour remédier à ces inconvénients, on prévoit que, d'une part, chaque servocommande électrohydraulique pour un aileron ou pour une gouverne de profondeur peut prendre au moins un état actif, pour lequel ledit aileron ou ladite gouverne est commandé, et au moins un état passif, pour lequel ledit aileron ou ladite gouverne est amorti, et que, d'autre part, l'une des deux servocommandes électrohydrauliques associées est dans son état actif lorsque l'autre est dans son état passif et vice-versa.

De plus, la probabilité de la perte de deux circuits hydrauliques sur un avion est de l'ordre de $10^{-7}$ ou $10^{-8}$ par heure de vol. Un tel événement ne doit pas avoir de conséquence catastrophique et ne doit pas entraîner le flottement d'une surface aérodynamique de commande. Cela implique donc que, dans le cas d'un aileron ou d'une gouverne de profondeur commandés par deux servo-commandes électrohydrauliques, celles-ci doivent assurer, dans le cas de défaillance des circuits hydrauliques les alimentant, un amortissement dynamique de l'aileron ou de la gouverne qu'elle commandent, même si la perte des circuits hydrauliques est due à une rupture des tuyauteries alimentant lesdites servocommandes. Aussi, selon une caractéristique de la présente invention, lesdites servocommandes électrohydrauliques associées aux ailerons et aux gouvernes de profondeur prennent automatiquement leur état passif, dès la perte de la pression hydraulique les alimentant.

En ce qui concerne l'empennage horizontal à incidence variable, sa commande peut avantageusement comporter deux moteurs hydrauliques commandés chacun par une servovalve.

En commande normale, l'un des moteurs est piloté par sa servovalve, tandis que l'autre moteur est au repos. En commande de secours, les deux moteurs hydrauliques sont commandés en parallèle par une commande mécanique.

On remarquera que la commande mécanique de secours de l'empennage horizontal à incidence variable perd de l'efficacité si les gouvernes de profondeur qui lui sont associées ne sont pas maintenues rigidement à l'incidence nulle, pour se mettre dans le lit du vent. Aussi, selon une autre particularité de l'invention, les servocommandes des gouvernes de profondeur peuvent prendre un troisième état de recentrage, pour lequel, en absence d'ordre électrique, est imposé mécaniquement l'asservissement à une position prédéterminée de recentrage.

Par ailleurs, afin de pouvoir prendre rapidement en compte les rafales de vent verticales, il est avantageux que les servocommandes associées aux ailerons puissent prendre un autre état passif sans amortissement.

Dans un mode de réalisation avantageux, une servocommande pour aileron selon l'invention, à un état actif et à un état passif amorti, comporte une servovalve, un vérin à deux chambres de cylindre séparées par un piston à faces symétriques relié audit aileron, une électrovanne comportant deux premiers orifices respectivement reliés auxdites chambres de cylindre, deux seconds orifices reliés entre eux par un étranglement ou analogue et deux troisièmes orifices reliés respectivement aux sorties de ladite servovalve, lesdits premiers et seconds orifices étant respectivement reliés entre eux lorsque l'électrovanne n'est pas excitée, alors que lesdits premiers et troisièmes orifices sont respectivement en liaison lorsque ladite électrovanne est excitée.

De façon analogue, une servocommande pour aileron selon l'invention, à un état actif et à deux états passifs, dont l'un amorti et l'autre non, comporte une servovalve, un vérin à deux chambres de cylindre séparées par un piston à faces symétriques relié audit aileron, deux électrovannes comportant chacune trois paires d'orifices dont les deux premiers sont respectivement reliés aux deux seconds lorsque ladite électrovanne n'est pas excitée et aux deux troisièmes lorsque ladite électrovanne est excitée, lesdits premiers orifices de la première électrovanne étant reliés respectivement auxdites chambres du vérin, lesdits seconds orifices de la première électrovanne étant reliés respectivement auxdits premiers orifices de la seconde électrovanne, lesdits troisièmes orifices de ladite première électrovanne étant reliés respectivement aux sorties de ladite servovalve, lesdits seconds orifices de la seconde électrovanne étant reliés entre eux par un étranglement ou analogue et lesdits troisièmes orifices de la seconde électrovanne étant reliés entre eux par une libre communication.

Une servocommande de gouverne de profondeur à un état actif, un état passif et un état de recentrage automatique peut comporter une servovalve comportant une entrée mécanique, un vérin à deux chambres de cylindre séparées par un piston à faces symétriques relié à ladite gouverne, un capteur pour détecter la position dudit piston et commander une position de centrage de ladite gouverne par rapport à l'empennage horizontal à incidence variable, une liaison mécanique entre ledit capteur et ladite entrée mécanique de la servovalve et une électrovanne comportant deux premiers orifices respectivement reliés auxdites chambres de cylindre, deux seconds orifices reliés respectivement aux sorties de la servovalve et deux troisièmes orifices reliés entre eux par un étranglement ou analogue, lesdits premiers et seconds orifices étant respectivement reliés entre eux lorsque l'électrovanne n'est pas excitée alors que lesdits premiers et troisièmes orifices sont respectivement en liaison lorsque ladite électrovanne est excitée.

Chacune desdites servocommandes peut être équipée d'un système de clapets isolant ladite servocommande de ses liaisons hydrauliques extérieures lorsque la pression de fluide à l'intérieur de celles-ci baisse ou disparaît et d'un réservoir de fluide sous pression pour maintenir le remplissage hydraulique des circuits de ladite servocommande lorsque celle-ci est isolée par ledit système de clapets.

Par ailleurs, ledit second ensemble de calcul comporte une pluralité de calculateurs distincts, dont chacun d'eux commande une partie des déflecteurs et aérofreins d'extrados et comporte des fonctions de commande normales et de commande de secours.

Les figures du dessin annexé feront bien comprendre comment l'invention peut être réalisée.

La figure 1 montre, en perspective du dessus, un avion civil gros porteur mettant en application le système de commandes de vol selon l'invention.

La figure 2 est une vue schématique du système de commande de vol selon l'invention.

La figure 3 donne le schéma synoptique d'une servocommande d'ailerons conforme à l'invention.

La figure 4 donne le schéma synoptique d'une variante de réalisation de la servocommande d'ailerons de la figure 3.

La figure 5 donne le schéma synoptique d'une servocommande de gouverne de profondeur conforme à l'invention.

Sur ces figures, des références identiques désignent des éléments semblables.

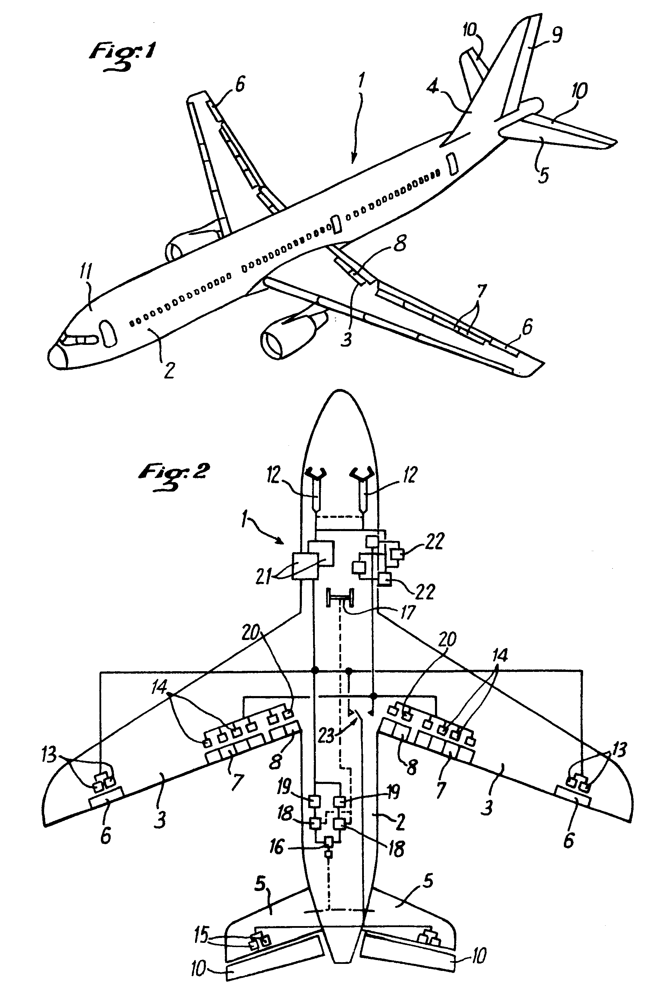

L'avion civil gros porteur 1, montré en perspective sur la figure 1, comporte un fuselage 2, des ailes 3, un empennage vertical 4 et un empennage horizontal 5.

Sur l'extrados des ailes 3 sont prévus des ailerons 6 de bord de fuite pour la commande en roulis, des déflecteurs de roulis 7 et des aérofreins 8. Sur l'empennage vertical 4 est prévue une gouverne de direction 9, tandis que des gouvernes de profondeur 10 sont articulées sur le bord de fuite de l'empennage horizontal 5. De plus, cet empennage horizontal 5 est monté pivotant par rapport au fuselage 2, afin que son angle d'incidence puisse varier.

Conformément à la présente invention, à partir du poste de pilotage 11, il existe:
— des liaisons électriques de commande pour les ailerons 6, les déflecteurs 7, les aérofreins 8 et les gouvernes de profondeur 10;
— une liaison mécanique de commande pour la gouverne de direction 9 (non représentée sur les figures);
— une liaison électrique de commande, assistée d'une liaison mécanique de secours, pour l'empennage horizontal 5.

Bien entendu, les organes de puissance actionnant lesdits ailerons, déflecteurs, aérofreins, gouvernes de profondeur et empennage horizontal et commandés électriquement peuvent être soit du type de ceux qui sont pilotés directement par des signaux électriques, soit du type de ceux qui comportent une entrée mécanique entraînée par un système servomoteur, qui, lui, est piloté électriquement.

Par ailleurs, il va de soi que des ordres de commande de pilotage manuel peuvent être issus de capteurs reliés à des organes de pilotage de type classique ou bien de minimanches (ministicks), mécaniquement conjugués ou non.

Dans l'exemple de réalisation montré par la figure 2, le pilotage de l'avion 1, à partir d'organes de pilotage 12, est réalisé de la façon suivante:
— en roulis:
a) Par un aileron 6 à chaque extrémité des ailes 3.

A chaque aileron 6 sont associées deux servocommandes électriques 13. Aucune commande de secours mécanique n'est prévue pour lesdits ailerons.

b) Par quatre déflecteurs 7, en position externe par rapport aux aérofreins 8.

A chacun de ces déflecteurs 7 est associée une seule servocommande électrique 14, sans secours mécanique.
— en profondeur:
c) Par deux gouvernes de profondeur 10, une de chaque côté du fuselage. A chaque gouverne de profondeur 10 sont associées deux servocommandes électriques 15. Aucune commande secours mécanique n'est prévue pour lesdites gouvernes de profondeur.

d) Par l'empennage horizontal 5 à incidence variable. Celui-ci est actionné par un vérin 16 pouvant être commandé électriquement à partir des organes de pilotage 12 ou mécaniquequent à partir d'un organe manuel spécifique 17, tel qu'un treuil. Le vérin 16 peut être entraîné par deux moteurs hydrauliques 18.

En commande normale, l'un ou l'autre desdits moteurs 18 est commandé par l'intermédiaire d'une servovalve 19, l'autre moteur restant inactif. En fonctionnement de secours, les deux moteurs 18 sont commandés en parallèle à partir de l'organe manuel spécifique 17.

— en direction:

e) Par la gouverne de direction 9 commandée mécaniquement.

Les aérofreins 8 sont chacun commandés par une servocommande électrique 20, non assistée par une commande de secours mécanique.

Dans la chaîne de commande entre les organes de pilotage 12 et les différentes surfaces aérodynamiques électriquement commandées 5, 6, 7, 8 et 10 sont interposés différents calculateurs réalisant la commande de celles-ci.

Le système de commandes selon l'invention comporte tout d'abord deux calculateurs 21 assurant:

— la commande des servocommandes 13 des ailerons de roulis 6;

— la commande normale des servocommandes 15 des gouvernes de profondeur 10; et

— la commande normale, à travers les servovalves 19, des moteurs hydrauliques 18 du vérin d'actionnement 16 de l'empennage horizontal 5 à incidence variable.

Les deux calculateurs 21 sont par exemple de conception, de technologie et d'origine identiques et chacun assure la commande et la surveillance du bon fonctionnement d'une servocommande 13 de chaque aileron 6, d'une servocommande 15 de chaque gouverne de profondeur 10 et d'un moteur hydraulique 18 du vérin d'empennage horizontal.

Le système selon l'invention comporte ensuite quatre calculateurs 22 qui sont de conception, de technologie et d'origine identiques entre eux, mais de conception, de technologie et d'origine différentes de celles des deux calculateurs 21.

Les calculateurs 22 assurent:

— la commande des servocommandes 14 et 20 des déflecteurs 7 et des aérofreins 8; et

— la commande de secours des servocommandes 15 des gouvernes de profondeur 10.

Chaque calculateur 22 possède des fonctions de commandes normales et de commandes de secours:

— en fonctionnement normal, chaque calculateur 22 assure la commande et la surveillance d'une ou de deux paires de déflecteurs 7 et d'aérofreins 8;

— en cas de panne d'un des calculateurs 22, la commande et la surveillance des déflecteurs 7 et/ou des aérofreins 8 qui lui étaient associés est reprise par l'un des calculateurs 22 dont le fonctionnement reste normal;

— en cas de panne des calculateurs 21 assurant normalement la commande et la surveillance des gouvernes de profondeur 10, un calculateur 22 reprend la commande et la surveillance d'une servocommande 15 de chacune des deux gouvernes 10, tandis que la commande et la surveillance des deux servocommandes 15 restantes sont assurées par un autre des calculateurs 22.

Sur la figure 2, la possibilité du passage de la commande normale des gouvernes de profondeur 10 par les calculateurs 21 à la commande de secours de celles-ci par les calculateurs 21 à été figuré par le commutateur 23.

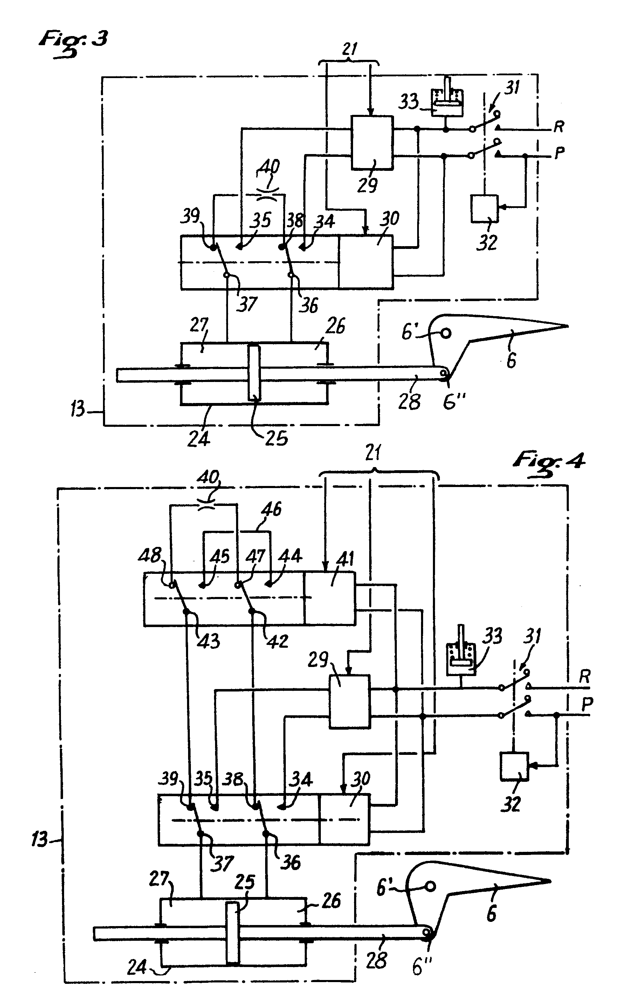

Comme on l'a vu ci-dessus, à chaque aileron 6 sont associées deux servocommandes 13. De telles servocommandes présentent au moins deux modes de fonctionnement, à savoir un mode actif et un mode passif amorti. Lorsque l'une des servocommandes 13 d'un aileron 6 est en mode actif, l'autre servocommande 13 du même aileron 6 est en mode amorti. La figure 3 montre le schéma synoptique d'une telle servocommande 13 à deux modes de fonctionnement. Sur cette figure 3, on a supposé que l'aileron 6 était articulé en 6' sur une aile 3 de l'avion 1.

La servocommande 13 pour un aileron 6, montrée au repos sur la figure 3, comporte un vérin hydraulique 24 dont le piston 25 présente des faces opposées identiques et partage le cylindre dudit vérin en deux chambres 26 et 27. Une tige de piston 28, solidaire dudit piston 25, est articulée en 6'' sur l'aileron 6, de façon à permettre la transformation du mouvement rectiligne de va-et-vient de la tige de piston 28 en un mouvement de rotation de l'aileron 6 autour de l'articulation 6'. La servocommande 13 comporte de plus une servovalve 29 et une électrovanne 30, électriquement commandées, par les calculateurs 21 et hydrauliquement reliées à une ligne P de fluide sous pression et à une ligne R de retour par l'intermédiaire de clapets d'isolation 31 commandés par un actuateur hydraulique 32. Une réserve de fluide 33 est disposée entre la servovalve 29 et l'électrovanne 30 d'une part, et les clapets 31 d'autre part. L'électrovanne 30 comporte deux orifices 34 et 35 pouvant respectivement être reliés à la ligne de pression P et à la ligne de retour R à travers la servovalve 29, deux orifices 36 et 37 respectivement reliés aux chambres 26 et 27 du vérin 24 et deux orifices 38 et 39 reliés l'un à l'autre par un dispositif d'étranglement ou de laminage de fluide 40. Lorsque l'électrovanne 30 est au repos, elle met en communication l'orifice 36 avec l'orifice 38 et l'orifice 37 avec l'orifice 39.

En revanche, lorsqu'elle est excitée, l'électrovanne 30 met en communication les orifices 36 et 34 et les orifices 37 et 39 respectivement.

Ainsi, lorsque la pression hydraulique est présente sur la ligne P, les clapets 31 sont fermés par l'activateur 32 et la servovalve 29 est alimentée en fluide. Si l'électrovanne 30 est excitée, les orifices 34 et 35 sont respectivement reliés aux chambres 26 et 27 du vérin 24, de sorte que l'aileron 6 est commandé en fonction des ordres adressés par les calculateurs 21 à la servovalve 29. La servocommande 13 est donc alors en mode actif. En revanche, lorsque l'électrovanne 30 est désexcitée, les orifices 36 et 37 sont respectivement reliés aux orifices 38 et 39, de sorte que les deux chambres 26 et 27 du vérin 24 communiquent l'une avec l'autre, à travers le dispositif d'étranglement 40. Les mouvements de l'aileron 6 sont alors amortis par ce dispositif 40.

Dans le cas où la pression du fluide hydraulique disparaît dans la ligne P, l'actuateur 32 ouvre les clapets 31 et l'électrovanne 30 est désexcitée par les calculateurs 21. La servocommande 13 se trouve donc dans son mode amorti et isolée de l'alimentation hydraulique. La réserve de fluide 33 permet de maintenir le remplissage des circuits de la servocommande 13 et donc de garantir l'amortissement de l'aileron 6, même en cas de légères fuites ou de dilatations différentielles, après isolement. Si la perte de l'alimentation hydraulique se produit sur celle des servocommandes 6, associées à l'aileron 6, qui était active, les calculateurs 21 commandent au mode actif l'autre servocommande 6 qui était en mode amorti.

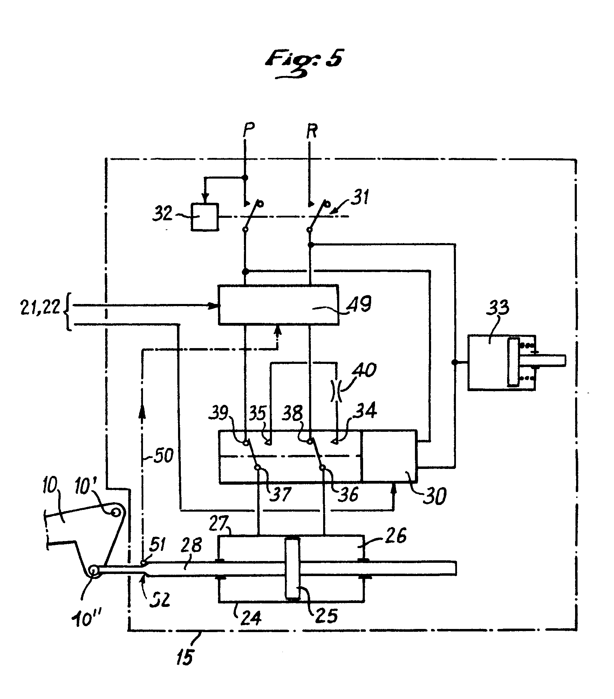

Sur la figure 4, on a représenté le schéma synoptique d'une variante de réalisation des servocommandes 13 associées aux ailerons 6. Cette variante de réalisation comporte l'intégralité de l'agencement 24 à 39 décrit en regard de la figure 3. Elle comporte une électrovanne supplémentaire 41, électriquement reliée aux calculateurs 21 et hydrauliquement reliée aux lignes P et R, de la même façon que l'électrovanne 30. Cette électrovanne supplémentaire 41 comporte deux orifices 42 et 43 respectivement reliés aux orifices 38 et 39 de l'électrovanne 30, deux orifices 44 et 45 reliés l'un à l'autre par une libre communication 46 et deux orifices 47 et 48 reliés l'un à l'autre à travers le dispositif d'étranglement ou de laminage 40. Lorsqu'elle n'est pas excitée, l'électrovanne supplémentaire 41 met en liaison des orifices 42 et 43 respectivement avec les orifices 47 et 48; en revanche, lorsqu'elle est excitée, ladite électrovanne 41 établit la communication hydraulique entre les orifices 42 et 43 et les orifices 44 et 45, respectivement.

Ainsi, comme on l'a vu ci-dessus, quand l'électrovanne 30 est excitée, elle met en liaison la servovalve 29 avec les chambres 26 et 27 du vérin 24, de sorte que l'aileron 6 répond aux ordres fournis à ladite servovalve par les calculateurs 21. La servocommande se trouve donc dans son mode actif.

En revanche, quand l'électrovanne 30 n'est pas excitée ou quand la pression est perdue sur la ligne P, les chambres 26 et 27 du vérin 24 sont reliées à l'électrovanne 41, respectivement à travers les liaisons 36, 38, 42 et 37, 39, 43. Dans ce cas:

— Si, l'électrovanne 41 n'est pas excitée, les deux chambres 26 et 27 du vérin 24 sont reliées l'une à l'autre par le dispositif d'étranglement ou de laminage 40 et la servocommande 13 se trouve dans son mode amorti.

— Si, au contraire, l'électrovanne 41 est excitée, les deux chambres 26 et 27 du vérin 24 sont reliées l'une à l'autre par la libre communication 46. Cette configuration est utilisée lors du contrôle de charge de la voilure pour répondre par un cabrage rapide et ample de l'aileron 6 à une forte charge verticale imposée par une rafale de vent.

Ainsi, la servocommande 13 de la figure 4 comporte un troisième mode, que l'on peut qualifier de dérivation. Ce mode peut être choisi (par excitation de l'électrovanne 41), même si la pression hydraulique est absente sur la ligne P. Comme mentionné précédemment, le système des clapets 31 permet d'isoler la servocommande 13 de ses alimentations hydrauliques en cas de baisse de pression, tandis que la réserve 33 permet de maintenir le remplissage hydraulique.

Les servocommandes 14 et 20 des déflecteurs 7 et des aérofreins 8 peuvent être de tout type connu et être commandées par une servovalve (non représentée) à zéro décalé; on applique à ladite servovalve un décalage mécanique tel que, en l'absence de courant de commande provenant des calculateurs 22, le déflecteur ou l'aérofrein correspondant se déplace vers sa position rentrée. On évite ainsi les déploiements intempestifs. Lorsque l'on veut asservir une telle servocommande à une position désirée, on superpose au courant de commande normal un courant destiné à annuler le décalage mécanique. On prévoit un système de clapets d'isolement qui réalise, en l'absence de pression hydraulique, un blocage hydraulique de l'actuateur du déflecteur ou de l'aérofrein qui interdit audit actuateur de se déplacer dans le sens du déploiement dudit déflecteur ou dudit aérofrein. Un dispositif mécanique, accessible de l'extérieur, permet de supprimer ce blocage hydraulique pour les opérations de maintenance au sol.

Sur la figure 5, on a représenté le schéma synoptique d'une servocommande 15, qui associée avec une autre servocommande identique, commande chaque gouverne de profondeur 10 articulée en 10' sur l'empennage horizontal 5.

De façon identique à ce qui a été mentionné ci-dessus à propos des figures 3 et 4, la servocommande est alimentée en fluide hydraulique par des lignes P et R et comporte un ensemble de vérin symétrique 24 à 28, commandant la gouverne 10 par l'intermédiaire de l'articulation 10'', ainsi qu'un ensemble d'électrovannes 30, 34 à 39 dont les orifices 36 et 37 sont respectivement reliés aux chambres 26 et 27. Une servovalve 49 est reliée aux orifices 38 et 39 de l'électrovanne 30, tandis qu'un dispositif de restriction ou de laminage de fluide 40 est disposé entre les orifices 34 et 35 de l'électrovanne 30. L'alimentation hydraulique de l'électrovanne 30 et de la servovalve 49 est assurée, à partir des lignes P et R, par l'intermédiaire d'un système d'isolation et de maintien de remplissage 31, 32, 33 du type décrit ci-dessus. L'électrovanne 30 et la servovalve 49 sont en liaison électrique avec les calculateurs 21, ou, en cas de secours, avec les calculateurs 22, par l'intermédiaire du commutateur 23.

La servovalve 49 est du type comportant, dans son premier étage, un élément mobile (flapper, jet pipe) susceptible d'être relié mécaniquement, par une liaison 50, à un palpeur 51 glissant sur une rampe 52 de la tige de piston 28. Ainsi, au déplacement électrique de commande normale dudit organe mobile de la servovalve 49, on ajoute un déplacement d'origine mécanique. La rampe 52 de la tige de vérin 28 est choisie pour qu'elle impose, par l'intermédiaire du palpeur 51 et de la liaison mécanique 50, un déplacement nul (recentrage), lorsque la gouverne 10 a une incidence nulle par rapport à l'empennage horizontal 5 auquel elle est articulée.

Lorsque l'électrovanne 30 n'est pas excitée, les chambres 26 et 27 du vérin 24 sont reliées à la servovalve 49, respectivement par les liaisons 36, 38 et 37, 39. La servovalve 49 peut donc piloter la gouverne 10 en fonction des ordres reçus des calculateurs 21 ou 22. Bien entendu, ces ordres tiennent compte de la perturbation introduite par la liaison mécanique 50 et comportent un signal électrique propre à annuler l'effet de celle-ci. On se trouve donc alors en mode actif.

Si l'électrovanne 30 est excitée, ou bien encore si une baisse de pression est détectée sur la ligne R, les deux chambres 26 et 27 du vérin 24 sont reliées entre elles par le dispositif 40, de sorte que l'on se trouve en mode amorti de la gouverne 10.

Si l'électrovanne 30 n'est pas excitée et si la servovalve ne reçoit pas d'ordre des calculateurs, la liaison mécanique 50 procède à un recentrage de la gouverne 10 par rapport à l'empennage horizontal 5.

Chaque servocommande est donc capable de trois modes, à savoir le mode actif, le mode amorti et le mode de recentrage.

En fonctionnement normal, des deux servocommandes 15 associées à une gouverne de profondeur 10 l'une est en mode actif et l'autre en mode amorti. En cas de perte de la commande de la servocommande 15 en mode actif, celle-ci passe en mode amorti et les calculateurs 21 ou 22 rendent active la servocommande qui était en mode amorti. Dans le cas où, la pression hydraulique P est perdue pour les deux servocommandes 15 d'une gouverne 10, ces deux servocommandes passent en mode amorti. Si les deux commandes des deux servocommandes sont perdues, celles-ci passent toutes les deux en mode de recentrage.

**Revendications**

1. Système de commandes de vol pour un aéronef (1) pourvu d'ailerons (6), de gouvernes de profondeur (10), de déflecteurs d'extrados (7) et d'aérofreins d'extrados (8), d'une gouverne de direction (9) et d'un empennage horizontal à incidence variable (5), ledit système comportant une commande électrique éventuellement sans commande mécanique de secours pour lesdits déflecteurs d'extrados (7) et lesdits aérofreins (8), caractérisé en ce que:
— les ailerons (6) et les gouvernes de profondeur (10) sont commandés électriquement sans secours mécanique;
— la gouverne de direction (9) est commandée mécaniquement; et
— l'empennage horizontal à incidence variable (5) est commandé électriquement avec secours mécanique.

2. Système de commande de vol pour aéronef selon la revendication 1, comportant au moins un calculateur pour commander et surveiller les organes d'actionnement desdits ailerons, gouvernes de profondeur, déflecteurs d'extrados, aérofreins d'extrados et empennage horizontal, caractérisé en ce qu'il comporte un premier ensemble de calcul (21) associé auxdits ailerons (6), auxdites gouvernes de profondeur (10) et audit empennage horizontal (5) à incidence variable et un second ensemble de calcul (22), de conception et d'origine différentes de celles dudit premier ensemble de calcul (21), associé auxdits déflecteurs (7) et aérofreins (8), ainsi qu'auxdites gouvernes de profondeur (10), en cas de défaillance dudit premier ensemble de calcul (21).

3. Système selon la revendication 2, caractérisé en ce que ledit premier ensemble de calcul comporte deux calculateurs (21) distincts, tandis que, à chaque aileron (6), à chaque gouverne de profondeur (10) et à l'empennage horizontal (5) à incidence variable sont associées deux commandes électrohydrauliques (13, 15 et 16, 18, 19 respectivement), dont l'une est commandée par l'un desdits calculateurs (21) et l'autre par l'autre calculateur (21).

4. Système selon la revendication 3, caractérisé en ce que, d'une part, chaque servocommande électrohydraulique (13) pour un aileron (6) peut prendre au moins un état actif, pour lequel ledit aileron (6) est commandé et au moins un état passif, pour lequel ledit aileron (6) est amorti et, d'autre part, l'une des deux servocommandes (18) associées à un aileron (6) est dans son état actif lorsque l'autre est dans son état passif et vice-versa.

5. Système selon la revendication 3, caractérisé en ce que, d'une part, chaque servocommande électrohydraulique (15) pour une gouverne de profondeur (10) peut prendre au moins un état actif pour lequel ladite gouverne (10) est commandée et au moins un état passif, pour lequel ladite gouverne (10) est amortie et, d'autre part, l'une des deux servocommandes (15) associées à une gouverne (10) est dans son état actif lorsque l'autre est dans son état passif et vice-versa.

6. Système selon l'une quelconque des revendications 4 ou 5, caractérisé en ce que lesdites servocommandes électrohydrauliques (13 ou 15) prennent automatiquement leur état passif, dès la perte de la pression hydraulique les alimentant.

7. Système selon l'une quelconque des revendications 2 à 6, caractérisé en ce que la commande électrohydraulique de l'empennage horizontal à incidence variable (5) comporte deux moteurs hydrauliques (18) commandés chacun par une servovalve (19), de façon que l'un des moteurs soit piloté par sa servovalve lorsque l'autre est au repos.

8. Système selon la revendication 5, caractérisé en ce que lesdites servocommandes électrohydrauliques (15) des gouvernes de profondeur (10) peuvent prendre un troisième état pour lequel, en absence d'ordres électriques, la position desdites gouvernes est asservie à une position prédéterminée correspondant au moins approximativement à une incidence nulle par rapport audit empennage horizontal (5).

9. Système selon la revendication 4, caractérisé en ce que lesdites servocommandes électrohydrauliques (13) des ailerons (6) peuvent prendre un troisième état passif sans amortissement du mouvement desdits ailerons.

10. Système selon la revendication 4, caractérisé en ce que chaque servocommande électrohydraulique (13) pour un aileron (6) comporte une servovalve (29), un vérin (24) à deux chambres de cylindre (26 et 27) séparées par un piston (25) à faces symétriques relié audit ailerons (6), une électrovanne (30) comportant deux premiers orifices (36 et 37) respectivement reliés auxdites chambres de cylindre (26 et 27), deux seconds orifices (38 et 39) reliés entre eux par un étranglement ou analogue (40) et deux troisièmes orifices (34 et 35) reliés respectivement aux sorties de ladite servovalve (29), lesdits premiers et seconds orifices étant respectivement reliés entre eux lorsque l'électrovanne (30) n'est pas excitée,

alors que lesdits premiers et troisièmes orifices sont respectivement en liaison lorsque ladite électrovanne (30) est excitée.

11. Système selon la revendication 9, caracterisé en ce que chaque servocommande électrohydraulique (13) pour un aileron (6) comporte une servovalve (29), un vérin (24) à deux chambres de cylindre (26 et 27) séparées par un piston (25) à faces symétriques relié audit aileron (6), deux électrovannes (30 et 41) comportant chacune trois paires d'orifices dont les deux premiers (36, 37 ou 42, 43) sont respectivement reliés aux deux seconds (38, 39 ou 47, 48) lorsque ladite électrovanne (30 ou 41) n'est pas excitée et aux deux troisièmes (34, 35 ou 44, 45) lorsque ladite électrovanne (30 ou 41) est excitée, lesdits premiers orifices (36, 37) de la première électrovanne (30) étant reliés respectivement auxdites chambres (26, 27) du vérin, lesdits seconds orifices (38, 39) de ladite première électrovanne (30) étant reliés respectivement auxdits premiers orifices (42, 43) de la seconde électrovanne (41), lesdits troisièmes orifices (34, 35) de ladite première électrovanne (30) étant reliés respectivement aux sorties de ladite servovalve (29), lesdits seconds orifices (47, 48) de ladite seconde électrovanne (41) étant reliés entre eux par un étranglement ou analogue (40) et lesdits troisièmes orifices (44, 45) de ladite seconde électrovanne (41) étant reliés entre eux par une libre communication (46).

12. Système selon la revendication 8, caracterisé en ce que chaque servocommande électrohydraulique (15) pour une gouverne de profondeur (10) comporte une servovalve (49) comportant une entrée mécanique, un vérin (24) à deux chambres de cylindre (26, 28) séparées par un piston (25) à faces symétriques relié à ladite gouverne (10), un capteur (51) pour détecter une position dudit piston et commander une position de centrage de ladite gouverne (10) par rapport à l'empennage horizontal (5) à incidence variable, une liaison mécanique (50) entre ledit capteur et ladite servovalve (49) et une électrovanne (30) comportant deux premiers orifices (36, 37) respectivement reliés auxdites chambres de cylindre (26, 27), deux seconds orifices (38, 39) reliés respectivement aux sorties de la servovalve (49) et deux troisièmes orifices (34, 35) reliés entre eux par un étranglement ou analogue (40), lesdits premiers et seconds orifices étant respectivement reliés entre eux lorsque l'électrovanne (49) n'est pas excitée, alors que lesdits premiers et troisièmes orifices sont respectivement en liaison lorsque ladite électrovanne est excitée.

13. Système selon l'une quelconque des revendications 10 à 12, caracterisé en ce que chaque servocommande est équipée d'un système de clapets (31) isolant ladite servocommande de ses liaisons hydrauliques extérieures lorsque la pression du fluide à l'intérieur de celles-ci baisse ou disparaît et d'un réservoir (33) de fluide sous pression pour maintenir le remplissage hydraulique de ladite servocommande, lorsque celle-ci est isolée par ledit système de clapets (31).

14. Système selon l'une quelconque des revendications 1 à 13, caracterisé en ce que ledit second ensemble de calcul comporte une pluralité de calculateurs (22) distincts, dont chacun d'eux commande et surveille une partie desdits déflecteurs (7) et aérofreins (8) d'extrados.

15. Système selon la revendication 14, caractérisé en ce que chaque calculateur (22) comporte des fonctions de commande normale et des fonctions de commande de secours.

**Patentansprüche**

1. Steuerungssystem für ein Flugzeug (1) mit Querrudern (6), Höhenrudern (10), Flügeloberseitendeflektoren (7) und Luftbremsen (8) an den Flügeloberseiten, einem Seitenruder (9) und einem Höhenleitwerk (5) mit veränderlichem Anstellwinkel sowie einer elektrischen Steuerung ggf. ohne mechanische Hilfssteuerung für die Flügeloberseitendeflektoren (7) und die Luftbremsen (8), dadurch gekennzeichnet,

dass die Querruder (6) und die Höhenruder (10) elektrisch, ohne mechanische Hilfssteuerung betrieben werden,

dass das Seitenruder (9) mechanisch gesteuert wird und

dass das Höhenleitwerk (5) mit veränderlichem Anstellwinkel elektrisch mit mechanischer Hilfssteuerung betrieben wird.

2. Steuerungssystem für ein Flugzeug nach Anspruch 1 mit mindestens einer Rechnereinheit zur Steuerung und Überwachung der Antriebsorgane der Querruder, Höhenruder, Flügeloberseitendeflektoren, Luftbremsen und des Höhenleitwerkes, dadurch gekennzeichnet, dass eine erste Rechnereinheit (21) für die Querruder (6), Höhenruder (10) und das Höhenleitwerk (5) mit veränderlichem Anstellwinkel und eine zweite Rechnereinheit (22) unterschiedlicher Konzeption und Ursprungs von der ersten Rechnereinheit (21) vorgesehen ist für die Deflektoren (7) und Luftbremsen (8) sowie die Höhenruder (10) für den Fall des Ausfalls der ersten Rechnereinheit (21).

3. Steuerungssystem nach Anspruch 2, dadurch gekennzeichnet, dass die erste Rechnereinheit zwei Rechner (21) besitzt, die unterschiedlich voneinander sind und dass jedem Querruder (6), jedem Höhenruder (10) und jedem Höhenleitwerk (5) mit veränderlichem Anstellwinkel zwei elektro-hydraulische Steuerungen (13, 15 und 16, 18, 19) zugeordnet sind, von denen die eine durch den einen Rechner (21) und die andere durch den anderen Rechner (21) gesteuert wird.

4. Steuerungssystem nach Anspruch 3, dadurch gekennzeichnet, dass einerseits jede elektro-hydraulische Servosteuerung (13) für ein Querruder (6) wenigstens einen aktiven Zustand einnehmen kann, bei dem das Querruder (6) betätigt werden kann und wenigstens einen passiven Zustand, bei dem das Querruder (6) gedämpft ist und dass andererseits eine der beiden Servosteuerungen (18), die mit einem Querruder (6) verbunden ist, in ihrem aktiven Zustand ist, wenn die andere in ihrem passiven Zustand ist und umgekehrt.

5. Steuerungssystem nach Anspruch 3, dadurch gekennzeichnet, dass einerseits jede elektro-hydraulische Servosteuerung (15) für ein Höhenruder (10) wenigstens einen aktiven Zustand einnehmen kann, bei dem das Höhenruder betätigt werden kann und wenigstens einen passiven Zustand, bei dem das Höhenruder gedämpft ist und dass andererseits eine der beiden Servosteuerungen (15), die mit dem Höhenruder (10) verbunden sind, in ihrem aktiven Zustand ist, wenn die andere in ihrem passiven Zustand ist und umgekehrt.

6. Steuerungssystem nach einem der Ansprüche 4 oder 5, dadurch gekennzeichnet, dass die elektro-hydraulischen Servosteuerungen (13 oder 15) automatisch ihren passiven Zustand einnehmen, wenn es zum Ausfall des sie antreibenden hydraulischen Druckes kommt.

7. Steuerungssystem nach einem der Ansprüche 2 bis 6, dadurch gekennzeichnet, dass die elektrohydraulische Steuerung des Höhenruderleitwerkes (5) mit veränderlichem Anstellwinkel zwei Hydraulikmotoren (18) enthält, von denen jeder durch ein Servoventil (19) gesteuert wird, wobei der eine der Motoren durch sein Servoventil gesteuert wird, wenn der andere in Ruhezustand ist.

8. Steuerungssystem nach Anspruch 5, dadurch gekennzeichnet, dass die elektro-hydraulischen Servosteuerungen (15) der Höhenruder (10) einen dritten Zustand einnehmen können, bei dem beim Fehlen von elektrischen Befehlen die Position der Ruder eine vorbestimmte Position einnimmt, bei der der Anstellwinkel wenigstens annähernd Null ist mit Bezug auf das Höhenleitwerk (5).

9. Steuerungssystem nach Anspruch 4, dadurch gekennzeichnet, dass die elektro-hydraulischen Servosteuerungen (13) der Querruder (6) einen dritten passiven Zustand, ohne Dämpfung der Querruderbewegung, einnehmen können.

10. Steuerungssystem nach Anspruch 4, dadurch gekennzeichnet, dass jede elektro-hydraulische Servosteuerung (13) für ein Querruder (6) ein Servoventil (29), eine Winde (24) mit zwei Zylinderkammern (26 und 27) aufweist, die durch einen Kolben (25) mit symmetrischen Flächen getrennt sind, der seinerseits mit dem Querruder (6) verbunden ist, dass ferner ein Elektroschieber (30) vorgesehen ist, der zwei erste Öffnungen (36 und 37) besitzt, die mit den Zylinderkammern (26, 27) verbunden sind, zwei zweite Öffnungen (38 und 39), die miteinander durch eine Drossel (40) oder analog verbunden sind und zwei dritte Öffnungen (34 und 35), die entsprechend mit den Ausgängen des Servoventils (29) verbunden sind und dass die ersten und zweiten Öffnungen entsprechend untereinander verbunden sind, während der Elektroschieber (30) ausser Betrieb ist und die ersten und dritten Öffnungen entsprechend verbunden sind, wenn der Elektroschieber (30) in Betrieb ist.

11. Steuerungssystem nach Anspruch 9, dadurch gekennzeichnet, dass jede elektro-hydraulische Servosteuerung (13) für ein Querruder (6) ausgerüstet ist mit: einem Servoventil (29), einer Winde (24) mit zwei Zylinderkammern (26 und 27), die getrennt sind durch einen Kolben (25) mit symmetrischen Flächen, der mit dem Querruder (6) verbunden ist, dass zwei Elektroschieber (30 und 41) vorgesehen sind, von denen jeder drei Öffnungspaare enthält, von denen die beiden ersten (36, 37 oder 42, 43) entsprechend mit den beiden zweiten (38, 39 oder 47, 48) verbunden sind, wenn der Elektroschieber (30 oder 41) ausser Betrieb ist und mit den beiden dritten (34, 35 oder 44, 45), wenn der Elektroschieber (30 oder 41) in Betrieb ist, dass die ersten Öffnungen (36, 37) des ersten Elektroschiebers (30) entsprechend mit den Kammern (26, 27) der Winde verbunden sind, dass die zweiten Öffnungen (38, 39) des ersten Elektroschiebers (30) entsprechend mit den ersten Öffnungen (42, 43) des zweiten Elektroschiebers (41) verbunden sind, dass die dritten Öffnungen (34, 35) des ersten Elektroschiebers (30) mit den Ausgängen des Servoventils (29) verbunden sind, dass die zweiten Öffnungen (47, 48) des zweiten Elektroschiebers (41) durch eine Drossel oder ähnliches (40) miteinander verbunden und dass die dritten Öffnungen (44, 45) des zweiten Elektroschiebers (41) frei miteinander (46) verbunden sind.

12. Steuerungssystem nach Anspruch 8, dadurch gekennzeichnet, dass jede elektro-hydraulische Servosteuerung (15) für ein Höhenruder (10) ein Servoventil (49) enthält, das seinerseits mit einem mechanischen Eingang versehen ist sowie eine Winde (24) mit zwei Zylinderkammern (26, 27), die voneinander durch einen Kolben (25) mit symmetrischen Flächen getrennt sind, der mit dem Höhenruder (10) verbunden ist, dass eine Einrichtung (51) vorgesehen ist, um eine Position des Kolbens anzuzeigen und eine Zentralstellung des Höhenruders (10) in Betrieb zu setzen hinsichtlich des Höhenleitwerkes (5) mit veränderlichem Anstellwinkel, dass ferner eine mechanische Verbindung (50) zwischen der Einrichtung (51) und dem Servoventil (49) besteht und ein Elektroschieber (30) vorgesehen ist, der zwei erste Öffnungen (36, 37) enthält, die entsprechend mit den Zylinderkammern (26, 27) verbunden sind, zwei zweite Öffnungen (38, 39), die entsprechend mit den Servoventilausgängen (49) verbunden sind und zwei dritte Öffnungen (34, 35) die miteinander durch eine Drossel oder dgl. (40) verbunden sind und dass die ersten und zweiten Öffnungen untereinander verbunden sind, wenn der Elektroschieber (49) ausser Betrieb ist, und die ersten und dritten Öffnungen entsprechend in Verbindung stehen, wenn der Elektroschieber in Betrieb ist.

13. Steuerungssystem nach einem der Ansprüche 10 bis 12, dadurch gekennzeichnet, dass jede Servosteuerung mit einem Klappensystem (31) ausgerüstet ist, das die Servosteuerung von ihren hydraulischen Aussenverbindungen isoliert, wenn der Druck des Fluids im Inneren von jenen Verbindungen sinkt oder verschwindet und dass ein Behälter (33) für das Fluid unter Druck vorgesehen ist, um die hydraulische Auffüllung der genannten Servosteuerung aufrechtzuerhalten, wenn jene durch das Klappensystem (31) isoliert wird.

14. Steuerungssystem nach einem der Ansprüche 1 bis 13, dadurch gekennzeichnet, dass die zweite Rechnereinheit eine Vielzahl verschiedener Rechner (22) hat, wobei jeder von ihnen einen Teil der genannten Deflektoren (7) und Luftbremsen (8) an den Flügeloberseiten steuert und überwacht.

15. Steuerungssystem nach Anspruch 14, dadurch gekennzeichnet, dass jeder Rechner (22) normale Steuerfunktionen als auch Hilfssteuerfunktionen zulässt.

**Claims**

1. Flight control system for an aircraft (1) provided with ailerons (6), elevators (10), upper surface spoilers (7) and upper surface air-brakes (8) a rudder (9) and a horizontal stabilizer (5) with variable angle of incidence, said system comprising electrical controls, optionally without mechanical emergency controls for said upper surface spoilers (7) and said air-brakes (8), characterized in that the ailerons (6) and elevators (10) are electrically controlled without any mechanical aid, the rudder (9) is mechanically controlled, and the horizontal stabilizer (5) with variable angle of incidence is electrically controlled with mechanical aid.

2. Flight control system for aircraft as claimed in claim 1, comprising at least one computer for controlling and monitoring the members actuating said ailerons, elevators, upper surface spoilers, upper surface air-brakes and horizontal stabilizer, characterized in that it comprises a first computer unit (21) operationally coupled to said ailerons (6), elevators (10), and to said horizontal stabilizer (5) with variable angle of incidence, and a second computer unit (22), different in design and origin from the first computer unit (21), and operationally coupled to said spoilers (7) and air-brakes (8), as well as to said elevators (10), in case of failure of said first computer unit (21).

3. Flight control system as claimed in claim 2, characterized in that said first computer unit comprises two separate computers (21) whereas to each aileron (6), each elevator (10) and to the horizontal stabilizer (5) with variable angle of incidence, are operationally coupled two electro-hydraulic controls (13, 15 and 16, 18, 19 respectively), one of which is controlled by one of said computers (21) and the other is controlled by the other computer (21).

4. Flight control system as claimed in claim 3, characterized in that, on the one hand, each electro-hydraulic servocontrol (13) for an aileron (6) can take up at least one active state for which said aileron (6) is controlled and at least one passive state, for which said aileron (6) is dampened and, on the other hand, one of the two servocontrols (18) operationally coupled to an aileron (6) is in its active state when the other is in the its passive state and vice-versa.

5. Flight control system as claimed in claim 3, characterized in that, on the one hand, each electro-hydraulic servocontrol (15) for an elevator (10) can take up at least an active state for which said elevator (10) is controlled at least a passive state, for which said elevator (10) is dampened, and, on the other hand, one of the two servocontrols (15) operationally coupled to an elevator (10) is in its active state when the other is in its passive state, and vice-versa.

6. Flight control system as claimed in any one of claims 4 or 5, characterized in that said electro-hydraulic servocontrols (13 or 15) automatically take up their passive state, as soon as the hydraulic pressure supplying them stops.

7. Flight control system as claimed in any one of claims 2 to 6, characterized in that the electro-hydraulic control of the horizontal stabilizer (5) with variable angle of incidence comprises two hydraulic motors (18), each one of which is controlled by a servovalve (19), so that one of the motors is controlled by its servovalve when the other one is inoperative.

8. Flight control system as claimed in claim 5, characterized in that said electro-hydraulic servocontrols (15) of said elevators (10) can take up a third state for which, without any electrically induced order, the position of said elevators is related to a predetermined position corresponding, at least approximately, to a nil angle of incidence with respect to said horizontal stabilizer (5).

9. Flight control system as claimed in claim 4, characterized in that said electro-hydraulic servocontrols (13) of the ailerons (6) can take up a third passive state without any dampening of the movement of said ailerons.

10. Flight control system as claimed in claim 4, characterized in that each electro-hydraulic servovocontrol (13) for an aileron (6) comprises a servovalve (29), a jack (24) with two cylinder chambers (26 and 27) separated by a piston (25) with symmetrical faces connected to said aileron (6), an electrovalve (30) comprising two first orifices (36 and 37) respectively connected to said cylinder chambers (26 and 27), two second orifices (38 and 39) connected together by a contraction or the like (40) and two third orifices (34 and 35) connected respectively to the outputs of said servovalve (29), said first and second orifices being respectively connected together when the electrovalve (30) is not energized, whereas said first and third orifices are respectively connected when said electrovalve (30) is energized.

11. Flight control system as claimed in claim 9, characterized in that each electro-hydraulic servocontrol (13) for an aileron (6) comprises a servovalve (29), a jack (24) with two cylinder chambers (26 and 27) separated by a piston (25) with symmetrical faces connected to said aileron (6), two electrovalves (30 and 41), each comprising three pairs of orifices, the first pair (36, 37 or 42, 43) being respectively connected to the second pair (38, 39 or 47, 48) when said electrovalve (30 or 41) is not energized and to the third pair (34, 35 or 44, 45) when said electrovalve (30 or 41) is energized, said first pair of orifices (36, 37) of the first electrovalve (30) being respectively connected to said jack chambers (26, 27), said second pair of orifices (38, 39) of the first electrovalve (30) being connected respectively to said first pair (42, 43) of the second electrovalve (41), said third pair of orifices (34, 35) of said first electrovalve (30) being connected respectively to the outputs of said servovalve (29), said second pair of orifices (47, 48) of said second electrovalve (41) being connected together by a contraction or the like (40), and said third pair of orifices (44, 45) of said second electrovalve (41) being connected together by a free communication (46).

12. Flight control system as claimed in claim 8, characterized in that each hydraulic servocontrol (15) for an elevator (10) comprises a servovalve (49) comprising a mechanical input, a jack (24) with two cylinder chambers (26, 27) separated by a piston (25) with symmetrical faces connected to said elevator (10), a sensor (51) for detecting a position of said piston and controlling a position of re-alignment of said elevator (10) with respect to said horizontal stabilizer (5) with variable angle of incidence, a mechanical connection (50) between said sensor and said servovalve (49) and an electrovalve (30) comprising two first orifices (36, 37) respectively connected to said cylinder chambers (26, 27), two second orifices (38, 39) respectively connected to the outputs of the servovalve (49) and two third orifices (34, 35) connected together by a contraction or the like (40), said first and second orifices being respectively connected together when the electrovalve (49) is not energized whereas said first and third orifices are respectively connected together when said electrovalve is energized.

13. Flight control system as claimed in any one of claims 10 to 12, characterized in that each servocontrol is equipped with a system of flaps (31) isolating said servocontrol from its external hydraulic connections when the pressure of the fluid inside said connections reduces or disappears and with a reservoir (33) of pressurized fluid to keep up the hydraulic filling of said servocontrol, when the latter is isolated by said flap system (31).

14. Flight control system as claimed in any one of claims 1 to 13, characterized in that said second computer unit comprises a plurality of separate computers (22), each one controlling and monitoring part of said upper surface spoilers (7) and air brakes (8).

15. Flight control system as claimed in claim 14, characterized in that each computer (22) fulfills normal control functions and emergency control functions.

Fig.1

Fig.2

0 152 714

Fig. 3

Fig. 4

## Fig. 5